# DEMANDE DE BREVET EUROPEEN

(11) **EP 1 445 571 A1**
(43) Date de publication de la demande: **11.08.2004**
(21) Numéro de dépôt: 04300053.8
(22) Date de dépôt: 29.01.2004
(51) Int. Cl.: F28F 7/02, F28F 13/00, F28D 7/00, F28F 1/12

(54) **Echangeur de chaleur comportant un bloc en nid d'abeilles, procédé pour sa fabrication, et moteur équipé d'un tel échangeur**

(30) Priorité: 31.01.2003 FR 0301086
(71) Demandeur: Renault s.a.s., 92100 Boulogne Billancourt (FR)
(72) Inventeur: Jouault, Jacques Renault s.a.s., 78180 Montigny le Bretonneux (FR)

(57) **Abrégé**

L'invention propose un échangeur de chaleur (14) comportant au moins un conduit principal (40) pour la circulation d'un fluide primaire, le conduit principal comportant une extrémité aval (56), une extrémité amont (54), et une partie centrale, et comportant une structure alvéolaire (42) prévue pour favoriser l'échange de température entre l'extérieur et l'intérieur du conduit principal (40), la structure alvéolaire (42) comportant une série de canaux (44) sensiblement parallèles entre eux, qui s'étendent entre deux surfaces d'extrémité (46, 48) de la structure alvéolaire (42), caractérisé en ce que le conduit principal (40) s'étend axialement dans une zone radiale de la structure alvéolaire (42), parallèlement aux canaux (44), et en ce que la partie centrale du conduit principal (40) est formée par un ensemble (45) de canaux (44) qui délimite une partie interne de la structure alvéolaire (42), dans laquelle circule au moins une partie du fluide primaire, et une partie externe de la structure alvéolaire (42), dans laquelle circule un fluide secondaire.

L'invention propose aussi un procédé pour la fabrication de l'échangeur (14) et un moteur équipé d'un tel échangeur (14).

## Description

La présente invention concerne un échangeur de chaleur.

La présente invention concerne plus particulièrement un échangeur de chaleur comportant au moins un conduit principal pour la circulation d'un fluide primaire, le conduit principal comportant une extrémité aval, une extrémité amont, et une partie centrale, et comportant une structure alvéolaire prévue pour favoriser l'échange de température entre l'extérieur et l'intérieur du conduit principal, la structure alvéolaire comportant une série de canaux sensiblement parallèles entre eux, qui s'étendent entre deux surfaces d'extrémité de la structure alvéolaire.

A la sortie du turbocompresseur, dans un moteur de véhicule automobile, les gaz d'admission comprimés ont une température élevée, de l'ordre de 180°Celsius par exemple.

C'est pourquoi il est nécessaire de faire passer ces gaz dans un échangeur de chaleur qui les refroidit avant de les injecter dans le collecteur d'admission du moteur.

Du fait de la température élevée des gaz d'admission comprimés, le conduit intermédiaire qui est utilisé pour transférer ces gaz depuis la sortie du turbocompresseur jusqu'à l'entrée de l'échangeur doit être réalisé dans une matière résistante à cette température.

On utilise généralement de l'acier inoxydable pour la partie rigide du conduit intermédiaire et de la silicone pour la partie souple du conduit intermédiaire, permettant des débattements du conduit.

La réalisation d'un tel type de conduit intermédiaire est coûteuse car elle fait appel à des matériaux différents qui doivent résister à des températures élevées.

L'invention vise à remédier à ces inconvénients en proposant un échangeur de chaleur intermédiaire plus compact que l'échangeur principal.

Dans ce but, l'invention propose un échangeur de chaleur du type décrit précédemment, caractérisé en ce que le conduit principal s'étend axialement dans une zone radiale de la structure alvéolaire, parallèlement aux canaux, et en ce que la partie centrale du conduit principal est formée par un ensemble de canaux qui délimite une partie interne de la structure alvéolaire, dans laquelle circule au moins une partie du fluide primaire, et une partie externe de la structure alvéolaire, dans laquelle circule un fluide secondaire.

Selon d'autres caractéristiques de l'invention :
- le fluide secondaire est l'air atmosphérique situé à l'extérieur du conduit principal ;
- les extrémités axiales des canaux formant la partie centrale du conduit principal sont obturées, de manière à isoler la partie interne par rapport à la partie externe de la structure alvéolaire ;
- la structure alvéolaire a une forme globalement cylindrique coaxiale au conduit principal ;
- la structure alvéolaire est réalisée en métal, par exemple en acier inoxydable ;
- l'extrémité aval et l'extrémité amont sont réalisées en matériau thermoplastique ;
- l'échangeur de chaleur comporte un conduit secondaire similaire au conduit principal, qui s'étend à l'intérieur du conduit principal, et qui transporte un fluide tertiaire ;
- le conduit principal est formé de plusieurs parties centrales qui sont raccordées entre elles par l'intermédiaire de conduits coudés agencés à l'extérieur de la structure alvéolaire.

L'invention concerne aussi un procédé de réalisation d'un échangeur de chaleur selon l'une quelconque des caractéristiques précédentes, caractérisé en ce que la structure alvéolaire est placée dans une empreinte d'un moule comportant au moins deux parties et deux noyaux cylindriques qui forment deux tronçons tubulaires en creux correspondant aux extrémités amont et aval du conduit principal, en ce que les canaux de la partie externe de la structure alvéolaire sont obturés par la partie correspondante du moule et les canaux de la partie interne de la structure alvéolaire sont obturés par les surfaces transversales en vis-à-vis des noyaux, et en ce que le moule est alimenté en matériau en fusion par deux points d'injection associés respectivement aux deux tronçons tubulaires, de manière à réaliser les extrémités amont et aval par moulage sur la structure alvéolaire.

Selon une autre caractéristique du procédé selon l'invention, les canaux formant la partie centrale sont au moins partiellement remplis par le matériau en fusion.

L'invention propose encore un moteur à combustion interne de véhicule automobile comportant un compresseur qui comprime des gaz d'admission et qui les évacue par un conduit d'évacuation vers le circuit d'admission du moteur, un échangeur de chaleur principal étant intercalé entre le conduit d'évacuation et le circuit d'admission, de manière à refroidir les gaz d'admission avant leur transfert vers le circuit d'admission, caractérisé en ce qu'il comporte un échangeur de chaleur intermédiaire qui est réalisé selon l'une quelconque des caractéristiques indiquées précédemment et qui est intercalé entre le conduit d'évacuation du compresseur et l'entrée de l'échangeur de chaleur principal, de manière à favoriser un refroidissement intermédiaire par convection des gaz d'admission comprimés, avant leur entrée dans l'échangeur de chaleur principal.

D'autres caractéristiques et avantages de l'invention apparaîtront à la lecture de la description détaillée qui suit pour la compréhension de laquelle on se reportera aux dessins annexés dans lesquels :
- la figure 1 est un schéma qui représente un moteur équipé d'un échangeur de chaleur intermédiaire réalisé conformément aux enseignements de l'invention ;
- la figure 2 est une vue en perspective éclatée qui représente schématiquement le turbocompresseur, l'échangeur de chaleur intermédiaire et le conduit de raccordement du moteur de la figure 1 ;
- la figure 3 est une vue en coupe transversale qui représente schématiquement l'échangeur de chaleur intermédiaire de la figure 1 ;
- la figure 4 est une vue agrandie similaire à la précédente qui représente schématiquement un détail de l'échangeur de chaleur intermédiaire de la figure 1 ;
- la figure 5 est une vue en coupe axiale qui représente schématiquement un moule pour la réalisation de l'échangeur de chaleur intermédiaire de la figure 1 ;
- la figure 6 est une vue schématique en coupe axiale qui représente une variante de réalisation de l'échangeur de chaleur intermédiaire comportant plusieurs tronçons centraux.

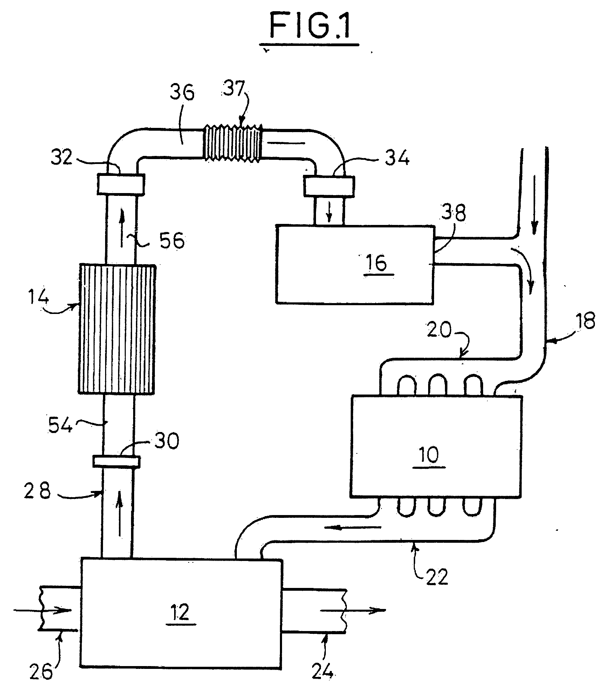

On a représenté schématiquement sur la figure 1 un moteur à combustion interne 10 de véhicule automobile qui est réalisé conformément aux enseignements de l'invention et qui comporte un turbocompresseur 12, un échangeur de chaleur intermédiaire 14 et un échangeur de chaleur principal 16.

Selon un fonctionnement classique du moteur à combustion 10 turbocompressé, celui-ci admet de l'air, dans les chambres de combustion de ses cylindres (non représentés), par l'intermédiaire d'un circuit d'admission 18 et d'un collecteur d'admission 20.

Après un cycle de combustion, les gaz d'échappement provenant des cylindres sont évacués vers l'extérieur par l'intermédiaire d'un collecteur d'échappement 22 et d'un circuit d'échappement 24, après être passés dans le turbocompresseur 12.

De manière classique, le turbocompresseur 12 comporte une turbine (non représentée) qui est entraînée en rotation par les gaz d'échappement provenant du collecteur d'échappement 22. La turbine entraîne en rotation un compresseur centrifuge (non représenté) qui aspire de l'air atmosphérique par un conduit d'arrivée d'air 26, qui le comprime et qui l'évacue par un conduit d'évacuation 28.

La compression de l'air d'admission par le compresseur provoque une élévation importante de la température de cet air comprimé. Il est donc nécessaire de le refroidir avant de pouvoir l'introduire dans le circuit d'admission 18.

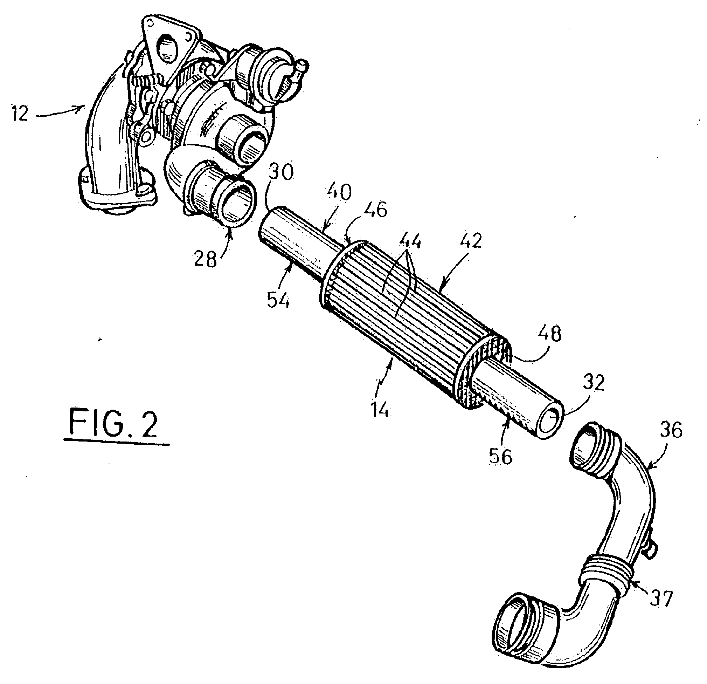

Conformément aux enseignements de l'invention, le conduit d'évacuation 28 est raccordé à l'entrée 30 de l'échangeur de chaleur intermédiaire 14, qui est représenté en perspective sur la figure 2.

L'échangeur de chaleur intermédiaire 14 qui est proposé par l'invention objet de la présente demande sera décrit plus précisément par la suite.

La sortie 32 de l'échangeur de chaleur intermédiaire 14 est raccordée à l'entrée 34 de l'échangeur de chaleur principal 16, ici par l'intermédiaire d'un conduit de raccordement 36.

Dans le mode de réalisation représenté ici, le conduit de raccordement 36 comporte une partie intermédiaire souple 37 qui permet un débattement radial de la sortie 32 de l'échangeur de chaleur intermédiaire 14 par rapport à l'entrée 34 de l'échangeur de chaleur principal 16.

L'extrémité d'entrée 30 et l'extrémité de sortie 32 de l'échangeur de chaleur intermédiaire 14 sont raccordées de manière étanche, respectivement à l'extrémité de sortie du conduit d'évacuation 28 et à l'extrémité d'entrée du conduit de raccordement 36.

Le raccordement de l'échangeur de chaleur intermédiaire 14 à l'extrémité de sortie du conduit d'évacuation 28 et à l'extrémité d'entrée du conduit de raccordement est réalisé par exemple par vissage ou par emboîtement au moyen d'épingles métalliques de type connu.

L'échangeur de chaleur principal 16 est connu de l'état de la technique. Ce peut être par exemple un échangeur du type air/air, qui utilise l'air atmosphérique pour refroidir l'air comprimé, ou un échangeur du type air/eau, qui utilise un liquide de refroidissement tel que le liquide de refroidissement du moteur 10 pour refroidir l'air comprimé.

La sortie 38 de l'échangeur de chaleur principal 16 est raccordée au circuit d'admission 18 du moteur 10, en amont du collecteur d'admission 20, de manière à introduire l'air comprimé dans le circuit d'admission 18, ce qui provoque un effet de suralimentation et améliore les performances du moteur 10.

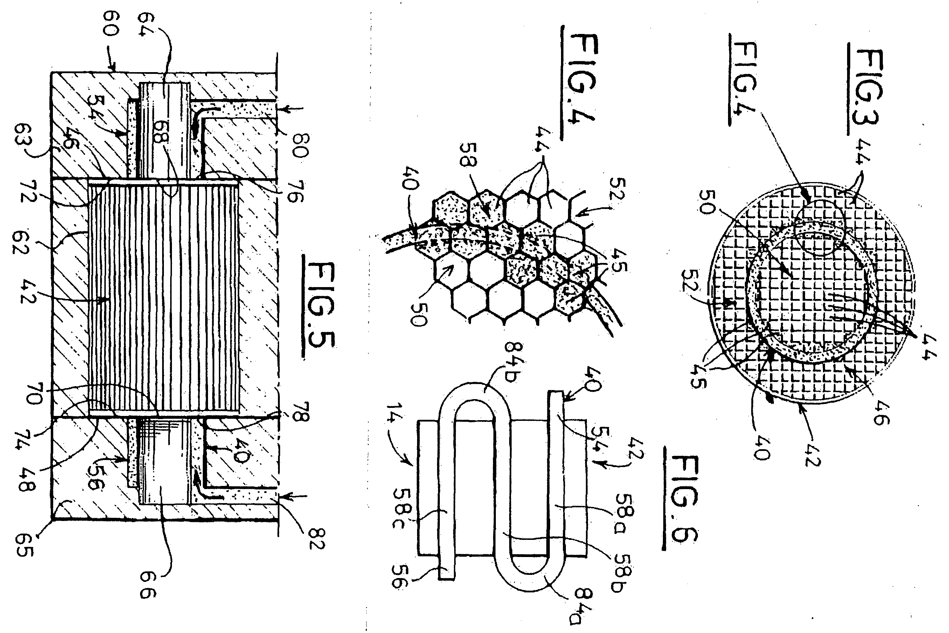

On décrira maintenant plus précisément l'échangeur de chaleur intermédiaire 14, notamment en référence aux figures 2, 3 et 4.

L'échangeur de chaleur intermédiaire 14 comporte un conduit principal 40 sensiblement tubulaire et un bloc à structure alvéolaire, par exemple un bloc en nid d'abeilles 42.

Le bloc en nid d'abeilles 42 a ici une forme sensiblement cylindrique. Il comporte une série de canaux parallèles 44 à faible section de passage, par rapport à la section de passage du conduit principal 40, qui s'étendent axialement entre deux surfaces transversales d'extrémité 46, 48 du bloc 42.

Selon le mode de réalisation représenté ici, chacun des canaux 44 du bloc en nid d'abeilles 42 a par exemple une section transversale de forme sensiblement hexagonale.

De préférence, le bloc en nid d'abeilles 42 est réalisé en métal, par exemple en acier inoxydable.

Conformément aux enseignements de l'invention, le conduit principal 40 s'étend coaxialement au bloc en nid d'abeilles 42, dans une zone radiale de ce bloc 42. Le conduit principal 40 est donc parallèle aux canaux 44 et il partage radialement le bloc 42 en deux parties, respectivement une partie interne 50 et une partie externe 52.

Selon une variante de réalisation (non représentée) de l'invention, la partie interne 50 du bloc en nid d'abeilles 42 peut être sensiblement tubulaire et comporter un trou annulaire sensiblement cylindrique.

Le conduit principal 40 comporte ici une extrémité amont, ou tronçon tubulaire amont 54, qui s'étend axialement vers l'extérieur depuis la surface transversale amont 46 du bloc en nid d'abeilles 42 et une extrémité aval, ou tronçon tubulaire aval 56, qui s'étend axialement vers l'extérieur depuis la surface transversale aval 48 du bloc en nid d'abeilles 42.

Le conduit principal 40 comprend aussi un partie centrale, ou tronçon central 58, qui s'étend axialement à l'intérieur du bloc en nid d'abeilles 42 de sorte que ce dernier soit traversé axialement de part en part par le conduit principal 40.

Avantageusement, le conduit principal 40 est réalisé par injection de sorte que son tronçon central 58 est formé par le remplissage d'une partie des canaux 44, les canaux 45, qui sont situés dans la zone radiale correspondante en vis-à-vis des surfaces transversales d'extrémité des tronçons amont 54 et aval 56, et qui sont remplis par le matériau d'injection.

Comme on l'a représenté en détail sur la figure 4, tous les canaux 44 dont une portion de la section se trouve en vis-à-vis de la surface transversale d'extrémité d'un tronçon amont 54 ou aval 56 sont remplis par le matériau d'injection, c'est à dire par le matériau dans lequel est injecté le conduit principal 40. Les canaux 44 remplis par le matériau d'injection sont désignés par la référence « 45 ».

Avantageusement, le matériau d'injection constituant le conduit principal 40 est une matière thermoplastique.

Selon une variante de réalisation de l'invention, il est possible de ne pas remplir de matériau d'injection les canaux 45 formant le tronçon central 58 du conduit principal 40 sur toute leur longueur axiale. En effet, si les parois des canaux 45 sont suffisamment étanches, il suffit de boucher les tronçons d'extrémité axiale des canaux 45 avec le matériau d'injection pour partager le bloc en nid d'abeilles 42 en une partie interne 50 et une partie externe 52. Le tronçon central 58 du conduit principal 40 est alors formé par des canaux 45 adjacents qui contiennent de l'air et qui sont fermés à leurs extrémités axiales par des « bouchons » en matériau d'injection.

Cette variante de réalisation peut permettre d'améliorer la conductivité thermique entre les canaux 44 de la partie interne 50 et les canaux 44 de la partie externe 52 puisque les deux parties 50, 52 sont alors séparées par des canaux 45 remplis d'air plutôt que des canaux 45 remplis de matériau d'injection.

Le procédé de fabrication de l'échangeur de chaleur intermédiaire 14 selon l'invention sera décrit plus précisément par la suite.

Selon le mode de réalisation représenté ici, le diamètre extérieur du bloc en nid d'abeilles 42 est par exemple sensiblement égal à cent millimètres et le diamètre intérieur du conduit principal est par exemple sensiblement égal à cinquante millimètres. La longueur du bloc en nid d'abeilles 42 est par exemple de trois cent millimètres.

On expliquera maintenant le fonctionnement de l'échangeur de chaleur intermédiaire 14.

Selon le fonctionnement classique d'un échangeur de chaleur, celui-ci est intercalé dans un conduit transportant un fluide primaire. Selon le mode de réalisation représenté ici, l'échangeur de chaleur intermédiaire 14 est intercalé entre le conduit d'évacuation 28 des gaz d'admission comprimés et le conduit de raccordement 36. Le fluide primaire est constitué ici des gaz d'admission comprimés.

Les gaz d'admission comprimés entrent dans l'échangeur de chaleur intermédiaire 14 par son entrée 30, c'est à dire par l'entrée du tronçon amont 54 du conduit principal 40.

Les gaz d'admission comprimés passent ensuite dans le tronçon central 58 du conduit principal 40. Comme le tronçon central 58 intègre la partie interne 50 du bloc en nid d'abeilles 42, les gaz d'admission comprimés doivent passer axialement à l'intérieur des canaux 44 de la partie interne 50 du bloc 42.

La circulation des gaz d'admission comprimés dans les canaux 44 du bloc en nid d'abeilles 42 provoque une dispersion des calories que contiennent les gaz dans le bloc en nid d'abeilles 42, ce qui provoque alors un refroidissement des gaz d'admission comprimés.

Le bloc en nid d'abeilles 42 favorise l'échange de température par convection entre l'intérieur et l'extérieur du conduit principal 40.

Comme le bloc en nid d'abeilles 42 comporte une partie externe 52, de l'air atmosphérique, dont la température est inférieure à la température des gaz d'admission comprimés, circule à l'intérieur des canaux 44 de la partie externe 52 ce qui améliore le refroidissement du bloc 42, et donc des gaz d'admission comprimés circulant dans la partie interne 50.

On note que l'air atmosphérique circulant dans les canaux 44 de la partie externe 52 constitue un fluide secondaire ou fluide de refroidissement. Les calories contenues dans le fluide primaire, ici les gaz d'admission comprimés, sont évacuées, au travers des parois axiales formant les canaux 44 du bloc en nid d'abeilles 42, vers le fluide secondaire, ici l'air atmosphérique.

On note qu'il n'y a pas de rupture de la structure du bloc en nid d'abeilles 42 entre l'intérieur et l'extérieur du tronçon central 58, car le tronçon central 58 est moulé à travers le bloc en nid d'abeilles 42. Par conséquent, les caractéristiques de conductivité thermique du bloc en nid d'abeilles métallique 42 sont conservées.

L'orientation des canaux 44 du bloc en nid d'abeilles 42 parallèlement au conduit principal 40, c'est à dire parallèlement au sens de circulation des gaz d'admission comprimés, permet d'éviter des pertes de charge importantes dans le flux des gaz d'admission comprimés.

On constate que plus on augmente la longueur axiale du bloc en nid d'abeilles 42, plus on améliore l'efficacité du refroidissement des gaz d'admission comprimés.

Après être passés dans le tronçon central 58 du conduit principal 40, les gaz d'admission comprimés sortent de l'échangeur de chaleur intermédiaire 14 par le tronçon aval 56 et sa sortie 32.

Grâce à l'échangeur de chaleur intermédiaire 14 selon l'invention, on a réduit de manière importante la température des gaz d'admission comprimés entre l'entrée 30 et la sortie 32.

Les gaz d'admission comprimés sont alors transférés, par l'intermédiaire du conduit de raccordement 36, vers l'échangeur de chaleur principal 16 qui va produire une nouvelle diminution de la température des gaz d'admission comprimés avant de les introduire dans le circuit d'admission 18.

On note que le refroidissement intermédiaire des gaz d'admission comprimés obtenu au moyen de l'échangeur de chaleur intermédiaire 14 permet d'utiliser, en aval de cet échangeur 14, des conduits et/ou des dispositifs qui sont réalisés dans des matériaux moins coûteux puisqu'ils doivent supporter des températures moins élevées qu'auparavant.

Auparavant, il était nécessaire de réaliser le conduit de raccordement 36 en plusieurs parties. On utilisait de l'acier inoxydable pour réaliser les parties rigides et de la silicone pour réaliser les parties souples assurant le débattement radial du conduit d'évacuation 28 du turbocompresseur 12 par rapport à l'entrée 34 de l'échangeur de chaleur principal 16.

Grâce à l'échangeur de chaleur intermédiaire 14 selon l'invention, on peut utiliser un conduit de raccordement 36 qui est réalisé globalement en une seule pièce, par exemple par injection d'une matière thermoplastique ce qui diminue de manière importante le coût de fabrication du conduit de raccordement 36.

De plus, l'échangeur de chaleur intermédiaire 14 permet dans certains cas, notamment dans le cas de moteurs du type à turbocompresseur pauvre, c'est à dire dont le turbocompresseur comprime l'air à des pressions inférieures à 1,5 bars, de supprimer ou de réduire l'encombrement de l'échangeur de chaleur principal 16.

On note que l'échangeur de chaleur intermédiaire 14 selon l'invention fonctionne sans qu'il soit nécessaire de lui fournir un fluide de refroidissement autre que l'air atmosphérique circulant naturellement autour de lui.

Cependant, selon une variante de réalisation (non représentée) de l'invention, on peut faire circuler dans la partie externe 52 du bloc en nid d'abeilles 42 un fluide de refroidissement spécifique, par exemple le liquide de refroidissement du moteur 10, en vue d'améliorer encore l'efficacité du refroidissement des gaz d'admission comprimés.

Bien entendu, selon des variantes de réalisation (non représentées) de l'invention, l'échangeur de chaleur 14 avec bloc en nid d'abeilles 42 peut être utilisé dans une autre application dans laquelle on a besoin de refroidir un fluide. Le fluide à refroidir peut être un gaz, mais ce peut être aussi de l'huile, du liquide de refroidissement, du carburant, etc.

Selon une variante de réalisation de l'invention, qui est représentée sur la figure 6, le conduit principal 40 peut être formé de plusieurs tronçons centraux 58 qui s'étendent parallèlement dans le bloc en nid d'abeilles 42.

L'extrémité axiale amont d'un premier tronçon central 58a est raccordée ici directement au tronçon amont 54 du conduit principal 40, et son extrémité axiale aval est raccordée à l'extrémité axiale amont d'un deuxième tronçon central 58b par l'intermédiaire d'un premier conduit coudé 84a.

L'extrémité axiale aval du deuxième tronçon central 58b est raccordée à l'extrémité axiale amont d'un troisième tronçon central 58c par l'intermédiaire d'un second conduit coudé 84b.

Enfin, l'extrémité axiale aval du troisième tronçon central 58c est raccordée directement au tronçon aval 56 du conduit principal 40.

Selon une autre variante de réalisation (non représentée) de l'invention, on peut surmouler un conduit secondaire à l'intérieur du conduit principal 40, afin d'y faire circuler un fluide tertiaire, par exemple un fluide de refroidissement. Avantageusement, le conduit secondaire est similaire au conduit principal 40, et il est réalisé suivant le même procédé de fabrication.

On expliquera maintenant le procédé de fabrication de l'échangeur de chaleur intermédiaire 14 selon l'invention, en référence à la figure 5.

Sur la figure 5 on a représenté schématiquement un moule 60 pour la réalisation de l'échangeur de chaleur intermédiaire 14.

Le moule 60 comporte une empreinte centrale 62 et deux empreintes d'extrémité 63, 65 qui sont prévues pour former, en coopération avec deux noyaux cylindriques 64, 66, les parois tubulaires du tronçon amont 54 et du tronçon aval 56 du conduit principal 40.

Le bloc en nid d'abeilles 42, qui est préalablement réalisé en acier inoxydable selon un procédé de fabrication connu, est placé à l'intérieur de l'empreinte centrale 62 sous la forme d'un insert.

Chaque noyau 64, 66 comporte une surface transversale d'extrémité 68, 70, ou plan de joint, qui est en appui axial contre la surface transversale d'extrémité associée 46, 48 du bloc en nid d'abeilles 42. Chacune de ces surfaces transversales d'extrémité 68, 70 délimite globalement la section transversale de la partie interne 50 du bloc en nid d'abeilles 42.

Les empreintes d'extrémité 63, 65 comportent aussi des surfaces transversales annulaires 72, 74, ou plans de joint, qui sont en appui axial respectivement contre les surfaces transversales d'extrémité associée 46, 48 du bloc en nid d'abeilles 42, de manière à délimiter globalement la section transversale de la partie externe 52 du bloc en nid d'abeilles 42.

Chaque surface transversale annulaire 72, 74 du moule 60 délimite donc radialement, avec la surface transversale d'extrémité 68, 70 du noyau associé 64, 66, sur la surface transversale d'extrémité associée 46, 48 du bloc en nid d'abeilles 42, une zone transversale annulaire 76, 78.

Chacune des zones transversales annulaires 76, 78 correspond à une portion du bloc en nid d'abeilles 42 qui se trouve en vis-à-vis d'une surface transversale d'extrémité axiale du tronçon 54, 56 associé du conduit principal 40. Ces zones transversales annulaires 76, 78 déterminent donc les canaux 45 qui seront remplis de matériau d'injection.

Les empreintes d'extrémité 63, 65 et les noyaux cylindriques 64, 66 associés forment entre eux deux respectivement deux tronçons tubulaires en creux, qui sont destinés à former les tronçons d'extrémité amont 54 et aval 56 du conduit principal 40.

Le moule 60 est alimenté ici par deux points d'injections 80, 82 opposés axialement, se trouvant dans les empreintes d'extrémité 63, 65.

Lorsque l'on alimente le moule 60 en matière thermoplastique en fusion, celle-ci pénètre dans les empreintes 62, 63, 65, puis elle pénètre dans les canaux 45 du bloc en nid d'abeilles 42 débouchant dans les zones transversales annulaires 76, 78.

La matière en fusion remplit ces canaux 45 de manière à traverser de part en part le bloc en nid d'abeilles 42 et de manière à former alors le tronçon central 58 du conduit principal 40.

On note que les surfaces transversales 68, 70, 72, 74 des noyaux 64, 66 et du moule 60 doivent être en appui axial de manière étanche contre les surfaces transversales d'extrémité associées 46, 48 du bloc en nid d'abeilles 42 de manière que, lors de l'injection de la matière thermoplastique, il ne puisse pas y avoir des « fuites » de matière entre ces surfaces transversales en vis-à-vis, ce qui pourrait boucher des canaux 44 de la partie interne 50 et/ou de la partie externe 52 du bloc en nid d'abeilles 42.

De plus, le bloc en nid d'abeilles 42 doit être suffisamment rigide de manière à pouvoir résister aux pressions d'injection utilisées pour réaliser le conduit principal 40.

Le procédé de fabrication du conduit principal 40 par surmoulage utilise une presse d'injection classique (non représentée).

Selon une variante de réalisation du procédé de fabrication de l'échangeur 14 selon l'invention, les tronçons d'extrémité 54, 56 du conduit 40 peuvent être collés sur le bloc en nid d'abeilles 42 par pression.

## Revendications

1. Echangeur de chaleur (14) comportant au moins un conduit principal (40) pour la circulation d'un fluide primaire, le conduit principal comportant une extrémité aval (56), une extrémité amont (54), et une partie centrale (58), et comportant une structure alvéolaire (42) prévue pour favoriser l'échange de température entre l'extérieur et l'intérieur du conduit principal (40), la structure alvéolaire (42) comportant une série de canaux (44) sensiblement parallèles entre eux, qui s'étendent entre deux surfaces d'extrémité (46, 48) de la structure alvéolaire (42), **caractérisé en ce que** le conduit principal (40) s'étend axialement dans une zone radiale de la structure alvéolaire (42), parallèlement aux canaux (44), et **en ce que** la partie centrale (58) du conduit principal (40) est formée par un ensemble (45) de canaux (44) qui délimite une partie interne (50) de la structure alvéolaire (42), dans laquelle circule au moins une partie du fluide primaire, et une partie externe (52) de la structure alvéolaire (42), dans laquelle circule un fluide secondaire.

2. Echangeur de chaleur (14) selon la revendication précédente, **caractérisé en ce que** le fluide secondaire est l'air atmosphérique situé à l'extérieur du conduit principal (40).

3. Echangeur de chaleur (14) selon l'une quelconque des revendications précédentes, **caractérisé en ce que** les extrémités axiales des canaux (45) formant la partie centrale (58) du conduit principal (40) sont obturées, de manière à isoler la partie interne (50) par rapport à la partie externe (52) de la structure alvéolaire (42).

4. Echangeur de chaleur (14) selon l'une quelconque des revendications précédentes, **caractérisé en ce que** la structure alvéolaire (42) a une forme globalement cylindrique coaxiale au conduit principal (40).

5. Echangeur de chaleur (14) selon l'une quelconque des revendications précédentes, **caractérisé en ce que** la structure alvéolaire (42) est réalisée en métal, par exemple en acier inoxydable.

6. Echangeur de chaleur (14) selon l'une quelconque des revendications précédentes, **caractérisé en ce que** l'extrémité aval (56) et l'extrémité amont (54) sont réalisées en matériau thermoplastique.

7. Echangeur de chaleur (14) selon l'une quelconque des revendications précédentes, **caractérisé en ce qu'**il comporte un conduit secondaire similaire au conduit principal (40), qui s'étend à l'intérieur du conduit principal (40), et qui transporte un fluide tertiaire.

8. Echangeur de chaleur selon l'une quelconque des revendications précédentes, **caractérisé en ce que** le conduit principal (40) est formé de plusieurs parties centrales (58) qui sont raccordées entre elles par l'intermédiaire de conduits coudés (84) agencés à l'extérieur de la structure alvéolaire (42).

9. Procédé de réalisation d'un échangeur de chaleur (14) selon l'une quelconque des revendications précédentes, **caractérisé en ce que** la structure alvéolaire (42) est placée dans une empreinte (62) d'un moule (60) comportant au moins deux parties (63, 65) et deux noyaux cylindriques (64, 66) qui forment deux tronçons tubulaires en creux correspondant aux extrémités amont (54) et aval (56) du conduit principal (40), **en ce que** les canaux (44) de la partie externe (52) de la structure alvéolaire (42) sont obturés par la partie correspondante (63, 65) du moule (60) et les canaux (44) de la partie interne (50) de la structure alvéolaire (42) sont obturés par les surfaces transversales (68, 70) en vis-à-vis des noyaux (64, 66), et **en ce que** le moule (60) est alimenté en matériau en fusion par deux points d'injection (80, 82) associés respectivement aux deux tronçons tubulaires, de manière à réaliser les extrémités amont (54) et aval (56) par moulage sur la structure alvéolaire (42).

10. Procédé selon la revendication précédente, **caractérisé en ce que** les canaux (45) formant la partie centrale (58) sont au moins partiellement remplis par le matériau en fusion.

11. Moteur à combustion interne (10) de véhicule automobile comportant un compresseur (12) qui comprime des gaz d'admission et qui les évacue par un conduit d'évacuation (28) vers le circuit d'admission du moteur (10), un échangeur de chaleur principal (16) étant intercalé entre le conduit d'évacuation (28) et le circuit d'admission (18), de manière à refroidir les gaz d'admission avant leur transfert vers le circuit d'admission (18), **caractérisé en ce qu'**il comporte un échangeur de chaleur intermédiaire (14) qui est réalisé selon l'une quelconque des revendications précédentes et qui est intercalé entre le conduit d'évacuation (28) du compresseur et l'entrée (34) de l'échangeur de chaleur principal (16), de manière à favoriser un refroidissement intermédiaire par convection des gaz d'admission comprimés, avant leur entrée dans l'échangeur de chaleur principal (16).
